(19) Europäisches Patentamt
European Patent Office
Office européen des brevets

(11) **EP 3 631 402 B1**

(12) **EUROPÄISCHE PATENTSCHRIFT**

(45) Veröffentlichungstag und Bekanntmachung des Hinweises auf die Patenterteilung:
**27.04.2022 Patentblatt 2022/17**

(21) Anmeldenummer: **18729556.3**

(22) Anmeldetag: **25.05.2018**

(51) Internationale Patentklassifikation (IPC):
**G01M 17/007** *(2006.01)*

(52) Gemeinsame Patentklassifikation (CPC):
**G01M 17/0072**

(86) Internationale Anmeldenummer:
**PCT/AT2018/060106**

(87) Internationale Veröffentlichungsnummer:
**WO 2018/213862 (29.11.2018 Gazette 2018/48)**

(54) **FAHRZEUGPRÜFSTAND UND VERFAHREN ZUR ERMITTLUNG EINER FAHRZEUGLÄNGSBESCHLEUNIGUNG**

VEHICLE TEST STAND AND METHOD FOR ASCERTAINING A VEHICLE LONGITUDINAL ACCELERATION

BANC D'ESSAI DE VÉHICULE ET PROCÉDÉ DE DÉTERMINATION D'UNE ACCÉLÉRATION LONGITUDINALE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2017 AT 504442017**

(43) Veröffentlichungstag der Anmeldung:
**08.04.2020 Patentblatt 2020/15**

(73) Patentinhaber: **Kristl, Seibt & Co. Gesellschaft m.b.H.**
**8052 Graz (AT)**

(72) Erfinder:
• **BAUER, Robert**
**8041 Graz (AT)**
• **ROSSEGGER, Wilfried**
**8052 Graz (AT)**

(74) Vertreter: **SONN Patentanwälte OG**
**Riemergasse 14**
**1010 Wien (AT)**

(56) Entgegenhaltungen:
**WO-A1-2015/157788     US-B1- 6 598 467**

**Beschreibung**

Das Gebiet der Erfindung ist die Bewertung einer Fahrzeugapplikation, insbesondere der Fahrbarkeit bzw. "Driveability" eines Kraftfahrzeugs. Bei einer solchen Bewertung ist der Parameter der Fahrzeuglängsbeschleunigung in verschiedenen Situationen des Fahrbetriebs von besonderer Bedeutung.

Die Erfindung betrifft in diesem Zusammenhang ein Verfahren zur Ermittlung einer Fahrzeuglängsbeschleunigung (bzw. eines Fahrzeuglängsbeschleunigungssignals) während einer Prüfung eines Fahrzeugs in einem Fahrzeugprüfstand, welcher zumindest einen Aktuator zur Bewegung des Fahrzeugs in eine Längsrichtung umfasst, wobei während der Prüfung in Echtzeit eine von einem Rad oder einem Antriebsstrang des Fahrzeugs ausgeführte Drehbewegung gemessen, eine Längsbeschleunigung entsprechend der gemessenen Drehbewegung ermittelt, und der zumindest eine Aktuator in Abhängigkeit von der ermittelten Längsbeschleunigung angesteuert wird.

Außerdem betrifft die Erfindung einen Fahrzeugprüfstand zur Ermittlung einer Fahrzeuglängsbeschleunigung (bzw. eines Fahrzeuglängsbeschleunigungssignals) während einer Prüfung eines Fahrzeugs, mit einer Messvorrichtung zur Messung einer Drehbewegung eines Rades oder eines Antriebsstrangs des Fahrzeugs, mit einem Aktuator zur Bewegung des Fahrzeugs in eine Längsrichtung, und mit einer Steuervorrichtung, welche mit der Messvorrichtung und mit dem Aktuator verbunden und eingerichtet ist, während der Prüfung in Echtzeit aus einer von der Messvorrichtung erhaltenen gemessenen Drehbewegung eine entsprechende Längsbeschleunigung zu ermitteln und in Abhängigkeit von der ermittelten Längsbeschleunigung ein Ansteuersignal an den Aktuator zu übermitteln.

Die Erfindung betrifft insbesondere die Ermittlung der Fahrzeuglängsbeschleunigung wie auf der Straße, d.h. möglichst nahe an den Gegebenheiten beim tatsächlichen Gebrauch des Fahrzeugs. Die Ermittlung soll am Fahrzeugprüfstand erfolgen, sodass keine Testfahrt erforderlich ist. Der Fahrzeugprüfstand ist dabei vorzugsweise ein Gesamtfahrzeug-Prüfstand. Der Aktuator zur Bewegung des Fahrzeugs in eine Längsrichtung ist zur Übertragung einer Längskraft auf das Fahrzeug eingerichtet; infolge der Einwirkung des Aktuators legt das Fahrzeug einen Translationsweg in die Längsrichtung zurück. Die Längsrichtung entspricht der Fahrtrichtung des Fahrzeugs bei Geradeausfahrt. Die Steuerung des Aktuators erfolgt in Echtzeit ("online"): die Zeitspanne zwischen einer Änderung der Drehbewegung und der Reaktion des Aktuators ist kleiner als 500 ms, vorzugsweise kleiner als 100 ms, insbesondere kleiner als 50 ms.. Im Einzelnen wird vorzugsweise die Position des Aktuators geregelt, wobei die Stellgröße (z.B. die vom Aktuator aufzubringende Längskraft) durch die ermittelte Längsbeschleunigung modifiziert oder "gestört" wird. Die Längsbeschleunigung kann beispielsweise aus dem Drehmoment der Drehbewegung ermittelt werden. Die Steuervorrichtung des Fahrzeugprüfstands bezeichnet dabei das gesamte zur Steuerung und Überwachung des Prüfstandes eingerichtete System, welches einen oder mehrere verbundene Computer bzw. Steuerungseinheiten umfassen kann.

Ein solches Verfahren und ein solcher Fahrzeugprüfstand sind aus der WO 2015/157788 A1 bekannt. Allerdings befasst sich diese Veröffentlichung nicht mit der Bewertung der Fahrbarkeit. Als Längsbeschleunigung des Fahrzeugs steht daher nur die entsprechend der gemessenen Drehbewegung auf Basis eines Fahrzeug-Modells ermittelte Längsbeschleunigung zur Verfügung. Diese ermittelte Längsbeschleunigung kann von der vom Fahrer wahrgenommenen tatsächlichen Längsbeschleunigung im Fahrzeug abweichen, vor allem wegen der Vereinfachung des Fahrzeug-Modells, d.h. der unvollständigen Modellierung des Fahrzeugs.

Die EP 1 085 312 A2 und die US 6,598,467 B1 beschreiben ein Verfahren zur Analyse des Fahrverhaltens von Kraftfahrzeugen auf einem Rollenprüfstand, wobei die Längsbeschleunigung, die zur Bestimmung der Fahrbar-keit herangezogen wird, aus einem Summensignal zweier überlager-ter Längsbeschleunigungssignale ermittelt wird. Dabei wird das erste Längsbeschleunigungssignal aus einer Drehzahl des Kraft-fahrzeugs oder des Prüfstandes berechnet und das zweite mithilfe eines am Kraftfahrzeug befestigten Beschleunigungssensors ermittelt. Nachteilig ist jedoch, dass die zur Ermittlung des zweiten Längsbeschleunigungssignals notwendige Relativbewegung des Kraftfahrzeugs gegenüber dem Rollenprüfstand einen Unterschied zwischen Rad- und Rollendrehzahl bewirkt, der auf der Straße nicht vorhanden ist und somit das Versuchsergebnis verfälscht.

Die EP 0 846 945 B1 auf dem Gebiet der Erfindung zeigt ebenfalls ein Verfahren zur Analyse des Fahrverhaltens von Kraftfahrzeugen. Dabei wird davon ausgegangen, dass der Parameter der Fahrzeuglängsbeschleunigung am Prüfstand nicht zur Verfügung steht, sondern nur im realen Fahrbetrieb auf der Straße gemessen und am Prüfstand allenfalls mittels eines selbstlernenden Systems aus der Drehzahl nachgebildet werden kann.

Eine Bewertung der Fahrbarkeit auf Basis der am Fahrzeug auf der Straße gemessenen Längsbeschleunigung ist auch in der US 4,169,370 A beschrieben.

Es ist eine Aufgabe der Erfindung, bei einem Verfahren und einem Fahrzeugprüfstand der eingangs angeführten Art eine möglichst realistische Längsbeschleunigung für die Bewertung der Fahrbar-keit bereitzustellen.

Das erfindungsgemäße Verfahren der eingangs angeführten Art ist dadurch gekennzeichnet, dass das Fahrzeug mit einem Beschleunigungssensor (insbesondere einem Längsbeschleunigungssensor) verbunden ist und während der Prüfung ein Beschleunigungssignal des Beschleunigungssensors erfasst und ein niederfrequenter Längsbeschleunigungsanteil in Abhängigkeit von der ermittelten Längsbeschleunigung und einem Positionsregelkreis zur Steuerung des Aktuators berechnet wird, und dass die Fahrzeuglängsbeschleunigung in Abhängigkeit von dem erfassten Beschleunigungssignal und dem berechneten niederfrequenten Längsbeschleunigungsanteil ermittelt wird. Dementsprechend ist bei einem erfindungsgemäßen Fahrzeugprüfstand der eingangs angeführten Art die Steuervorrichtung mit einem Beschleunigungssensor im oder am Fahrzeug verbunden und eingerichtet, während der Prüfung ein Beschleunigungssignal des Beschleunigungssensors zu erfassen, einen niederfrequenten Längsbeschleunigungsanteil in Abhängigkeit von der ermittelten Längsbeschleunigung und einem Positionsregelkreis zur Steuerung des Aktuators zu berechnen und die Fahrzeuglängsbeschleunigung in Abhängigkeit von dem erfassten Beschleunigungssignal und dem berechneten niederfrequenten Längsbeschleunigungsanteil zu ermitteln. Dadurch kann insgesamt eine Fahrzeuglängsbeschleunigung ermittelt werden, bei der auch niederfrequente Anteile möglichst realistisch, d.h. "wie auf der Straße", angegeben werden. Dies ist insbesondere dann nützlich, wenn die Grenzfrequenz der vom Aktuator nachgebildeten Beschleunigungsanteile oberhalb von 0,5 Hz, insbesondere oberhalb von 1 Hz liegt. Der Beschleunigungssensor ist mit dem Fahrzeug, insbesondere mit einem für die Bewertung der Fahrbarkeit relevanten Element im Fahrgastraum (z.B. einem Sitz oder einer Sitzschiene), gekoppelt und zur Erfassung der Beschleunigung des Fahrzeugs bzw. des betreffenden Elements eingerichtet. Der Beschleunigungssensor kann vom Fahrzeughersteller im Fahrzeug eingebaut bzw. integriert sein. Die Fahrzeuglängsbeschleunigung wird aufgrund einer zumindest von dem gemessenen Beschleunigungssignal abhängigen Funktion ermittelt. Um abgesehen von der Drehbewegung auch andere vom Fahrzeug ausgehende Kräfte zu berücksichtigen, welche zu niederfrequenten Beschleunigungsanteilen führen, wird der niederfrequente Längsbeschleunigungsanteil in Abhängigkeit von einem Positionsregelkreis zur Steuerung des Aktuators berechnet. Dementsprechend ist die Steuervorrichtung eingerichtet, den niederfrequenten Längsbeschleunigungsanteil in Abhängigkeit von einem Positionsregelkreis zur Steuerung des Aktuators zu berechnen.

Die Ansteuerung des Aktuators, welcher beispielsweise durch einen Linearmotor gebildet ist, erfolgt nicht auf Basis einer beliebigen vorgegebenen Prüflast oder auch einer rein rechnerisch simulierten Beschleunigung, sondern dynamisch ausgehend von einer Messung der Drehbewegung eines Rades oder eines Antriebsstrangs des Fahrzeugs, d.h. insbesondere ausgehend von einer direkten oder indirekten Messung des vom Rad ausgeübten Drehmoments, und in Echtzeit ("online"). So kann vorteilhaft eine realistische Reaktion des Prüflings auf die vom Fahrzeug ausgeführte Fahrzeugsteuerung (Gas geben, bremsen, schalten usw.) nachgebildet werden. Erst durch die richtige - d.h. dem realen Prüfling entsprechende - Reaktion des Prüfstands auf die physikalisch am Rad bzw. am Antriebsstrang erzielte Wirkung ist eine "Fahrzeugapplikation am Prüfstand" überhaupt sinnvoll und möglich, weil erst dann Veränderungen etwa im Motorsteuergerät Auswirkungen auf die vom Fahrzeugmodell online berechnete und vom Aktuator in den Prüfling eingebrachte Beschleunigung und somit auf das subjektive Empfinden des Fahrzeugapplikateurs haben.

Die exakte Längsbeschleunigung, welche das Fahrzeug auf der Straße ausführen würde, kann am Prüfstand nur sehr begrenzt verwendet werden, da sich beispielsweise in einem Vollgas-Szenario bereits nach wenigen Sekunden ein zurückgelegter Weg von über 100 m ergeben würde. Wie sich herausgestellt hat, kann bei längeren Prüfungen für die Ansteuerung des Aktuators die ermittelte Längsbeschleunigung zur Verkürzung eines ausgeführten Translationswegs gegenüber einem aus der ermittelten Längsbeschleunigung resultierenden Weg in eine gefilterte Beschleunigung umgewandelt bzw. umgerechnet werden. Die Umwandlung in eine gefilterte Beschleunigung macht sich die Tatsache zunutze, dass die von einer Person wahrgenommene Beschleunigung im Allgemeinen von der physikalischen Beschleunigung abweicht. Es wird daher vorzugsweise eine Umwandlung zur Annäherung eines subjektiv richtigen Beschleunigungseindrucks und unter Minimierung des vom Prüfling zurückgelegten Weges gewählt.

Es hat sich beispielsweise als günstig herausgestellt, wenn bei der Umwandlung der Beschleunigung niederfrequente Anteile der ermittelten Längsbeschleunigung reduziert werden. Dieses Vorgehen beruht auf der Erkenntnis, dass für die subjektive menschliche Wahrnehmung nur oder vor allem hochfrequente Anteile der Beschleunigung relevant sind. D.h. es werden in erster Linie relativ abrupte Änderungen der Beschleunigung wahrgenommenen, während eine gleichbleibende Beschleunigung oder langsame Änderungen - wenn überhaupt - deutlich weniger wahrgenommen werden. Als niederfrequente Anteile sind in diesem Zusammenhang insbesondere Anteile im Bereich von 1-2 Hz und darunter anzusehen.

Des Weiteren ist es vorteilhaft, wenn die ermittelte Längsbeschleunigung zur Umwandlung in die gefilterte Beschleunigung durch einen Hochpassfilter, beispielsweise einen nach Bessel oder Butterworth entworfenen Hochpassfilter oder vorzugsweise einen Hochpassfilter erster Ordnung gefiltert wird, wobei eine Zeitkonstante des Hochpassfilters vorzugsweise zwischen 0,01 und 1 Sekunde, insbesondere etwa 0,1 Sekunden beträgt. Eine solche Filterung der Längsbeschleunigung ist relativ effizient implementierbar und ermöglicht eine Reaktion in Echtzeit und eine Vermeidung von merklichen, die subjektive Wahrnehmung beeinträchtigenden Latenzen. Dementsprechend ist es bei dem vorliegenden Fahrzeugprüfstand von Vorteil, wenn die Steuervorrichtung einen Hochpassfilter für die ermittelte Längsbeschleunigung aufweist, beispielsweise einen nach Bessel oder Butterworth entworfenen Hochpassfilter oder vorzugsweise einen Hochpassfilter erster Ordnung, wobei eine Zeitkonstante des Hochpassfilters vorzugsweise zwischen 0,01 und 1 Sekunde, insbesondere etwa 0,1 Sekunden, beträgt.

Um den vom Fahrzeug tatsächlich im Prüfstand zurückgelegten Weg weiter zu reduzieren ist es günstig, wenn die Auslenkung des Aktuators auf eine konstante Sollposition, insbesondere in der Mitte eines vorgesehenen Verfahrwegs des Aktuators, geregelt wird. Auf diese Weise können mehrere aufeinanderfolgende, jedoch zeitlich unterbrochene bzw. streckenweise konstante Beschleunigungen in dieselbe Richtung bzw. mit demselben Vorzeichen innerhalb eines insgesamt kürzeren Translationswegs, insbesondere innerhalb derselben Translationsstrecke nachgebildet werden. Die Translationsstrecke wird dabei entsprechend der Beschleunigung mehrfach rasch jeweils in dieselbe Richtung zurückgelegt, wobei zwischen den Beschleunigungen das Fahrzeug durch die Positionsregelung relativ langsam und somit unmerklich zur Ausgangsposition, gegebenenfalls bis zur konstanten Sollposition, zurück bewegt wird. Die Sollposition kann dabei grundsätzlich so gewählt werden, dass die zu erwartenden Beschleunigungen realisierbar sind. In der Mitte des vorgesehenen Verfahrwegs sind Beschleunigungen in beide Richtung (vorwärts oder rückwärts bzw. Gas geben oder bremsen) gleichermaßen möglich. Falls je nach Richtung unterschiedliche bzw. unterschiedlich rasche Beschleunigungen erwartet werden, kann die Sollposition selbstverständlich diesen Erwartungen entsprechend angepasst werden.

Eine besonders einfache und zuverlässige Regelung kann erzielt werden, wenn die Auslenkung des Aktuators von einem Positionsregler, vorzugsweise mit einer Anstiegszeit zwischen 0,05 und 5 Sekunden, insbesondere mit einer Anstiegszeit von etwa 0,5 Sekunden, geregelt wird. Analog kann bei dem vorgeschlagenen Fahrzeugprüfstand vorgesehen sein, dass die Steuervorrichtung einen Positionsregler zur Regelung der Auslenkung des Aktuators aufweist, vorzugsweise mit einer Anstiegszeit zwischen 0,05 und 5 Sekunden, insbesondere von etwa 0,5 Sekunden. Als Positionsregler kann ein gewöhnlicher PID-Regler oder ein Kaskadenregler, z.B. mit einem als PI-Regler ausgeführten Geschwindigkeitsregler und einem als P-Regler ausgeführten vorgeordneten Auslenkungsregler, verwendet werden.

Im Zusammenspiel mit dem Positionsregelkreis ist es günstig, wenn ein der gefilterten Beschleunigung proportionaler Anteil als Störgröße auf den Positionsregelkreis einwirkt, insbesondere wenn zu einem Stellwert des Positionsregelkreises ein der gefilterten Beschleunigung proportionaler Anteil addiert wird. Vorzugsweise wird zu der z.B. von einem Positionsregler dem Aktuator vorgegebenen Kraft eine bei einer bekannten Fahrzeugmasse und einem gegebenenfalls bei mehreren Aktuatoren dem einzelnen Aktuator zugeordneten Anteil der gefilterten Beschleunigung entsprechende Kraft addiert. Der vom Aktuator ausgeführten gefilterten Beschleunigung ist somit ein Beschleunigungsanteil vom Positionsregelkreis überlagert, d.h. die niederfrequenten Anteile der ermittelten Längsbeschleunigung werden durch die Stellwerte des Positionsreglers ersetzt. Dabei wird vorzugsweise der Positionsregler nicht so scharf wie möglich eingestellt, damit die einer gefilterten Beschleunigung entsprechende Zusatzkraft ebenfalls vom Aktuator umgesetzt werden kann.

Der niederfrequente Längsbeschleunigungsanteil wird dabei als die Differenz zwischen der ermittelten Längsbeschleunigung und einem aus einer Stellgröße des Positionsregelkreises ermittelten hochfrequenten Längsbeschleunigungsanteil berechnet. Dementsprechend ist die Steuervorrichtung eingerichtet, den niederfrequenten Längsbeschleunigungsanteil als die Differenz zwischen der ermittelten Längsbeschleunigung und einem aus einer Stellgröße des Positionsregelkreises ermittelten hochfrequenten Längsbeschleunigungsanteil zu berechnen. In der Stellgröße des Positionsregelkreises wird die am Prüfstand wirkenden Längskraft abgebildet. Das umfasst insbesondere jene Kraft, die auf der Straße zu einer niederfrequenten Beschleunigung des Fahrzeugs führen würden, und am Prüfstand durch den Positionsregelkreis und die Wirkung des zumindest einen Aktuators überlagert bzw. teilweise kompensiert wird. Diese Kraft bzw. die entsprechende Beschleunigung ist mit dem Beschleunigungssensor nicht oder nur eingeschränkt feststellbar. Das betrifft beispielsweise durch Motorvibrationen erzeugte Strukturschwingungen, die bei dieser Vorgangsweise automatisch richtig in die Fahrzeuglängsbeschleunigung eingehen.

Beispielsweise kann die Fahrzeuglängsbeschleunigung im einfachsten Fall durch Überlagerung des erfassten Beschleunigungssignals und des berechneten niederfrequenten Längsbeschleunigungsanteil ermittelt werden. Dementsprechend kann die Steuervorrichtung eingerichtet sein, die Fahrzeuglängsbeschleunigung durch Überlagerung des erfassten Beschleunigungssignals und des berechneten niederfrequenten Längsbeschleunigungsanteil zu ermitteln.

Grundsätzlich kann der niederfrequente Längsbeschleunigungsanteil als das Komplement der gefilterten Beschleunigung auf die ermittelte Längsbeschleunigung angenommen werden.

Vorzugsweise kann jene Stellgröße zur Berechnung des niederfrequenten Längsbeschleunigungsanteils verwendet werden, welche die vom Aktuator auf das Fahrzeug aufzubringende Kraft angibt (z.B. die Luftspalt-Kraft des Aktuators), wobei der hochfrequente Längsbeschleunigungsanteil aus der Summe der Stellgrößen des oder der Aktuatoren dividiert durch die Masse des Fahrzeugs berechnet wird bzw. die Steuervorrichtung eingerichtet ist, den hochfrequenten Längsbeschleunigungsanteil aus der Summe der Stellgrößen des oder der Aktuatoren dividiert durch die Masse des Fahrzeugs zu berechnen. Dabei ist die Summe der Stellgrößen jener Aktuatoren gemeint, die zur Bewegung des Fahrzeugs in Längsrichtung eingerichtet sind.

Weiters betrifft die Erfindung ein Verfahren zur Ermittlung einer Fahrzeuglängsbeschleunigung während einer Prüfung eines Fahrzeugs in einem Fahrzeugprüfstand,

wobei der Fahrzeugprüfstand zumindest einen Aktuator zur Bewegung des Fahrzeugs in eine Längsrichtung umfasst,

wobei das Fahrzeug mit einem Beschleunigungssensor verbunden ist, und

wobei das Verfahren während der Prüfung folgende in Echtzeit ausgeführte Schritte umfasst:

Messen einer von einem Rad oder einem Antriebsstrang des Fahrzeugs ausgeführten Drehbewegung;

Ermitteln einer Längsbeschleunigung entsprechend der gemessenen Drehbewegung;

Ansteuern des zumindest einen Aktuators in Abhängigkeit von der ermittelten Längsbeschleunigung;

Erfassen eines Beschleunigungssignal des Beschleunigungssensors;

Ermitteln eines hochfrequenten Längsbeschleunigungsanteils aus einer Stellgröße des Positionsregelkreises;

Berechnen eines niederfrequenten Längsbeschleunigungsanteils in Abhängigkeit von der ermittelten Längsbeschleunigung und einem Positionsregelkreis des Aktuators als die Differenz zwischen der ermittelten Längsbeschleunigung und dem ermittelten hochfrequenten Längsbeschleunigungsanteil; und

Ermitteln der Fahrzeuglängsbeschleunigung in Abhängigkeit von dem erfassten Beschleunigungssignal und dem berechneten niederfrequenten Längsbeschleunigungsanteil.

Die genannten Schritte können dabei zumindest teilweise parallel ausgeführt werden. Als zusätzlicher Schritt kann ein Ausgeben oder Anzeigen der ermittelten Fahrzeuglängsbeschleunigung vorgesehen sein. Die weiter oben beschriebenen vorteilhaften Varianten des Verfahrens gelten analog für dieses Verfahren. Im Einzelnen können einer oder mehrere der folgenden Schritte hinzu kommen:

Berechnen eines hochfrequenten Längsbeschleunigungsanteils aus der Summe der Stellgrößen des oder der Aktuatoren dividiert durch die Masse des Fahrzeugs, wobei die Stellgrößen die vom jeweiligen Aktuator auf das Fahrzeug aufzubringende Kraft angeben; und Berechnen des niederfrequenten Längsbeschleunigungsanteils als die Differenz zwischen der ermittelten Längsbeschleunigung und dem berechneten hochfrequenten Längsbeschleunigungsanteil;

Ermitteln der Fahrzeuglängsbeschleunigung durch Überlagern des erfassten Beschleunigungssignals und des berechneten niederfrequenten Längsbeschleunigungsanteils.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. In den Zeichnungen zeigen dabei im Einzelnen:

Fig. 1 schematisch einen Gesamtfahrzeug-Prüfstand mit Aktuatoren zur Bewegung des Fahrzeugs in eine Längsrichtung;

Fig. 2a und 2b schematisch (simuliert) den zeitlichen Verlauf einer Fahrzeuglängsbeschleunigung bei einem Tip-In-Versuch, auf der Straße (Fig. 2a) bzw. aus einem Fahrzeug-Modell berechnet (Fig. 2b);

Fig. 3 schematisch ein stark vereinfachtes Blockschaltbild zur Ermittlung einer Fahrzeuglängsbeschleunigung auf einem Prüfstand gemäß Fig. 1;

Fig. 4 schematisch den zeitlichen Verlauf der Signale im Blockschaltbild gemäß Fig. 3;

Fig. 5 schematisch ein Blockschaltbild einer einfachen, nicht erfindungsgemäßen Ermittlung einer Fahrzeuglängsbeschleunigung auf einem Prüfstand mit einer Steuervorrichtung für einen Aktuator zur Übertragung einer Längskraft auf ein Fahrzeug; und

Fig. 6 schematisch ein Blockschaltbild zur erfindungsgemäßen Ermittlung einer Fahrzeuglängsbeschleunigung auf einem Prüfstand mit einer Steuervorrichtung für einen Aktuator zur Übertragung einer Längskraft auf ein Fahrzeug.

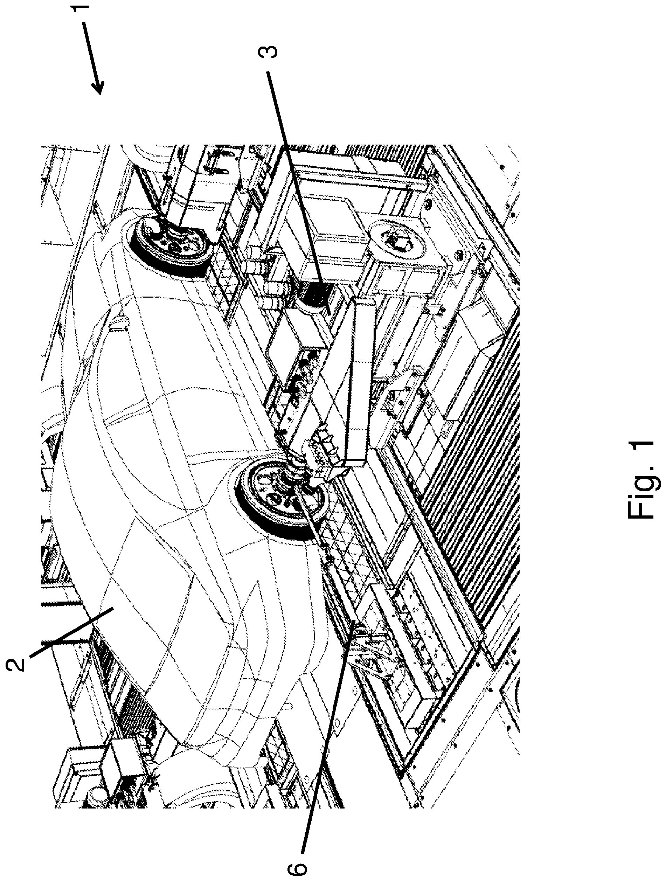

Die Technologie von Antriebsstrang-Prüfständen wurde in den letzten Jahren so weiterentwickelt, dass an einem sogenannten Fahrzeugprüfstand 1 bzw. Gesamtfahrzeug-Prüfstand (vgl. Fig. 1) der Prüfling, d.h. das Fahrzeug 2 (auch "DUT" für "device under test"), die exakt gleichen Belastungen wie auf der Straße erfährt. Dadurch wird die "Fahrzeugapplikation am Prüfstand" ermöglicht, bei der anstelle von zeit- und kostenintensiven Fahrversuchen auf einer Teststrecke dieselben Versuche am Prüfstand durchgeführt werden können. (siehe Pillas J., Kirschbaum F., Jakobi R., Gebhardt A., Uphaus F.: Model-based load change reaction optimization using vehicle drivetrain test beds. Tagungsband des 14. Internationalen Stuttgarter Symposiums, S. 857-867, 2014.)

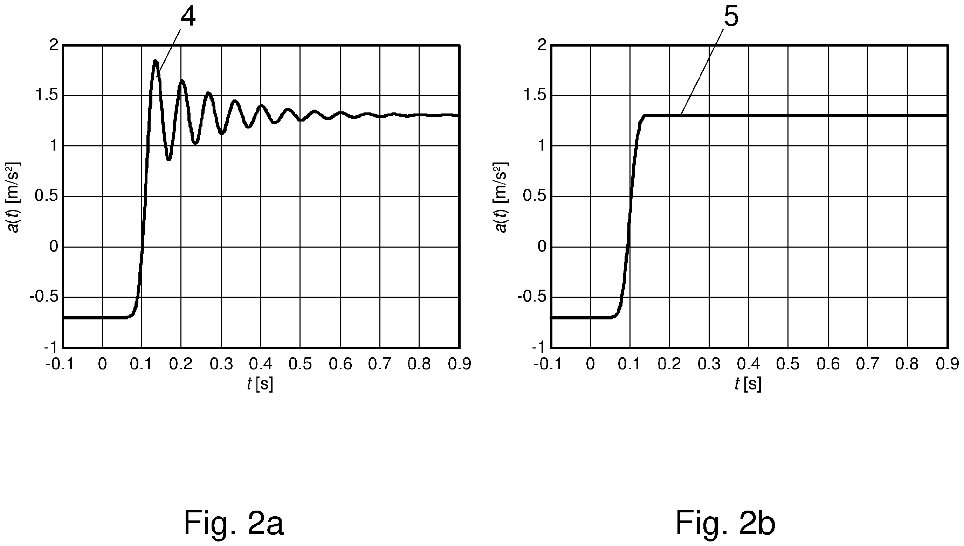

Hierbei werden mathematische Modelle des Fahrzeugs 2, der Räder und der Reifen am Prüfstand online mitgerechnet und die Radmaschinen 3 aufgrund der berechneten Werte dieser Modelle beaufschlagt. Verwendet man als Modell 2' für das Fahrzeug 2 ein einfaches Ein-Massen-Modell, hat sich allerdings gezeigt, dass die vom Modell 2' berechnete Längsbeschleunigung a am Prüfstand zu "glatt" ist: Bei einem beispielhaften Tip-In-Versuch (sprungförmige Erhöhung des Fahrpedalwerts) erhält man auf der Straße vom fahrzeugeigenen Längsbeschleunigungssensor einen schwingenden Signalverlauf 4 (vgl. Fig. 2a), während das vom Modell 2' berechnete Längsbeschleunigungssignal 5 am Prüfstand diese Schwingung nicht zeigt (vgl. Fig. 2b). Dieser Unterschied zwischen Straßen- und Prüfstandsmessung ist dann problematisch, wenn aufgrund dieses Signalverlaufs eine objektive Bewertung der Fahrbarkeit bzw. "Driveability" der aktuellen Fahrzeugapplikation durchgeführt werden soll.

Der Grund für die Abweichung der vom Modell 2' berechneten Längsbeschleunigung a liegt in der Modellierung des Fahrzeugs 2 als Ein-Massen-Modell. Tatsächlich besteht das Fahrzeug 2 aus mehreren Massen, die über verschiedene Feder-Dämpfer-Elemente miteinander verbunden sind. Beispielsweise kann der Achsschemel gegenüber der restlichen Karosserie schwingen und zu dem in Fig. 2a gezeigten Signalverlauf 4 beitragen. Die vorliegende Erfindung beruht auf der Erkenntnis, dass am Fahrzeugprüfstand 1 anstelle der bzw. zusätzlich zur Simulation die entsprechenden Teile des Fahrzeugs 2, die am Gesamtfahrzeug-Prüfstand ja real vorhanden sind, für die Ermittlung einer realistischen Fahrzeuglängsbeschleunigung $a_S$ genutzt werden können. Das setzt voraus, dass der Fahrzeugprüfstand 1 zumindest einen Aktuator 6 zur Bewegung des Fahrzeugs 2 in eine Längsrichtung umfasst und während der Prüfung in Echtzeit eine von einem Rad oder einem Antriebsstrang des Fahrzeugs 2 ausgeführte Drehbewegung gemessen, eine Längsbeschleunigung a entsprechend der gemessenen Drehbewegung ermittelt, und der zumindest eine Aktuator 6 in Abhängigkeit von der ermittelten Längsbeschleunigung a, insbesondere auf Basis eines hochfrequenten Beschleunigungsanteils $a_{HF}$ (auch "gefilterte" oder "subjektive" Beschleunigung) angesteuert wird. Ein entsprechender Fahrzeugprüfstand 1 ist beispielsweise in der WO 2015/157788 A1 beschrieben und kann gemäß den dort offenbarten Ausführungsbeispielen ausgeführt werden.

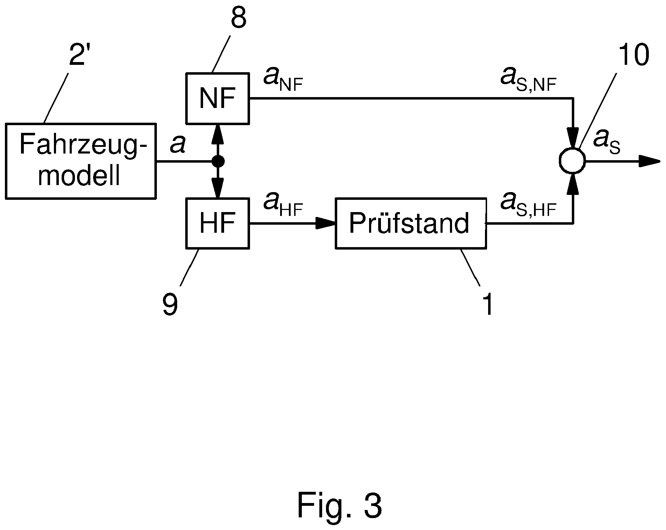

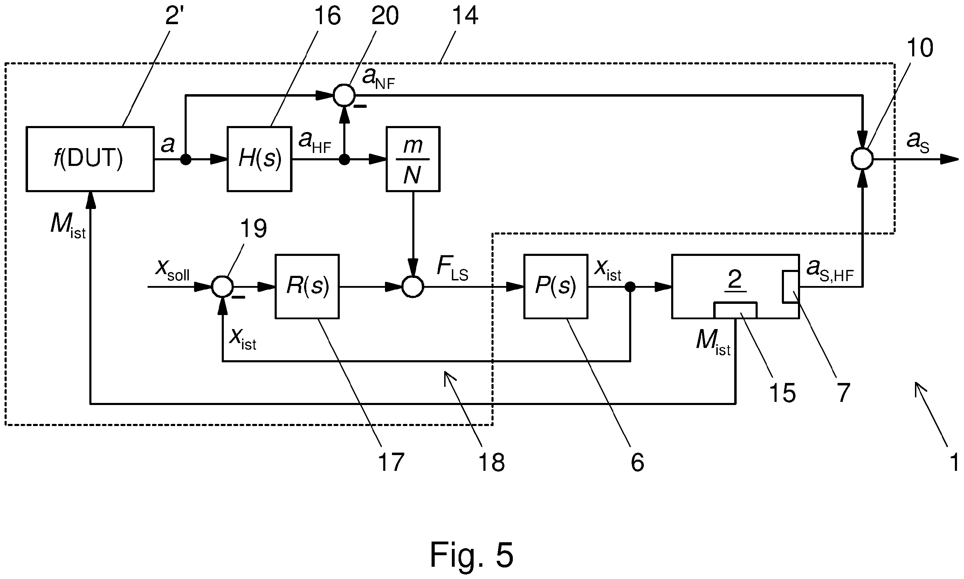

Ausgehend von einem solchen Fahrzeugprüfstand 1 sieht das vorliegende Verfahren vor, dass das Fahrzeug 2 mit einem Beschleunigungssensor 7 (vgl. Fig. 5) verbunden ist. Bei der Prüfung wird die vom Modell 2' berechnete Längsbeschleunigung a in einen niederfrequenten Längsbeschleunigungsanteil $a_{NF}$ und einen hochfrequenten Längsbeschleunigungsanteil $a_{HF}$ aufgespalten, z.B. mithilfe von Filtern 8, 9 (vgl. Fig. 3). Der hochfrequente Längsbeschleunigungsanteil $a_{HF}$ wird am Prüfstand über die Aktuatoren 6 (z.B. Linearmotoren) auf das real vorhandene Fahrzeug 2 aufgebracht. Mit dem Beschleunigungssensor 7 wird während der Prüfung ein Beschleunigungssignal $a_{S,HF}$ am oder im Fahrzeug 2 erfasst. Das so erfasste Beschleunigungssignal $a_{S,HF}$ wird anschließend mit dem berechneten niederfrequenten Längsbeschleunigungsanteil $a_{NF}$ in geeigneter Weise überlagert, um die gesuchte Fahrzeuglängsbeschleunigung $a_S$ zu erhalten.

Würde man nur den niederfrequenten Längsbeschleunigungsanteil $a_{NF}$ am Fahrzeugprüfstand 1 aufbringen (was aufgrund des erforderlichen Weges nicht geht), würde man mit dem Beschleunigungssensor 7 den exakt gleichen Verlauf $a_{S,NF}$ messen, da die fahrzeuginternen Schwingungsfrequenzen höher liegen. Den niederfrequenten Längsbeschleunigungsanteil $a_{NF}$ braucht man daher am Fahrzeugprüfstand 1 nicht aufbringen und man kann das gesuchte Längsbeschleunigungssignal $a_S$ durch Überlagern mittels Addition 10 erhalten:

$$a_S = a_{S,NF} + a_{S,HF} = a_{NF} + a_{S,HF}$$

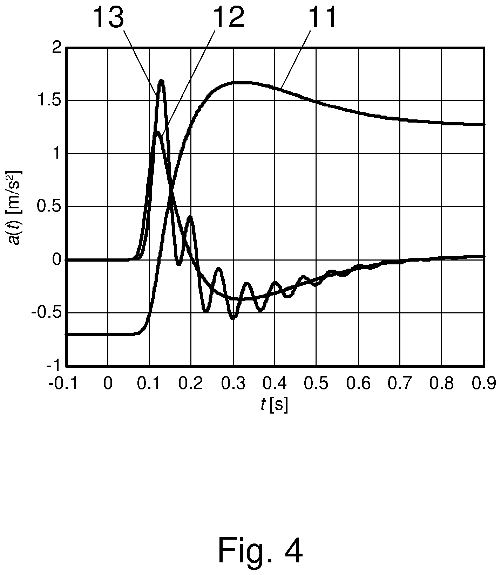

Fig. 4 zeigt beispielhaft einen Signalverlauf 11 des niederfrequenten Längsbeschleunigungsanteils $a_{NF}$, einen Signalverlauf 12 des vom Modell 2' berechneten hochfrequenten Längsbeschleunigungsanteils $a_{HF}$ und einen Signalverlauf 13 des am Prüfstand gemessenen Beschleunigungssignals $a_{S,HF}$.

Der niederfrequente Längsbeschleunigungsanteil $a_{NF}$ kann im einfachsten, nicht erfindungsgemäßen Fall als das Komplement des hochfrequenten Längsbeschleunigungsanteil $a_{HF}$ auf die ermittelte Längsbeschleunigung a angenommen werden. Dieser Fall ist in Fig. 5 gezeigt: diese stellt schematisch einen Fahrzeugprüfstand 1 mit einer Steuervorrichtung 14 für einen Aktuator 6 des Fahrzeugprüfstands 1 dar. Der Aktuator 6 ist durch einen Linearmotor (Übertragungsfunktion P(s)) zur Übertragung einer Längskraft auf ein mit dem Fahrzeugprüfstand 1 verbundenes Fahrzeug 2 (DUT, "device under test") gebildet. Zur Messung einer Drehbewegung eines Antriebsstranges oder eines Rades des Fahrzeugs 2 ist die Steuervorrichtung 14 mit einer Messvorrichtung 15, z.B. in Form eines Drehmomentsensors verbunden. Die Steuervorrichtung 14 ist eingerichtet, zunächst eine dem gemessenen Drehmomentwert $M_{ist}$ gemäß einem Modell 2' des Fahrzeugs 2 entsprechende Längsbeschleunigung a des Fahrzeugs 2 zu ermitteln. Die so ermittelte Längsbeschleunigung a wird anschließend in einem Hochpassfilter 16 modifiziert, wobei niederfrequente Anteile der Beschleunigung a unterdrückt werden, so dass der hochfrequente Längsbeschleunigungsanteil $a_{HF}$ einer subjektiven Beschleunigung entspricht. Der hochfrequente Längsbeschleunigungsanteil $a_{HF}$ wird passend gewichtet, d.h. mit einer Fahrzeugmasse m multipliziert und durch eine Anzahl N von (im Wesentlichen parallel ausgerichteten) Linearmotoren am Prüfstand dividiert. Die resultierende hochfrequente Beschleunigungskraft wird am Ausgang eines Positionsreglers 17 quasi als Störgröße zu dessen Stellwert zur Bildung der gewünschten Luftspalt-Kraft $F_{LS}$ des Aktuators 6 addiert. Der Positionsregler 17 ist zum praktisch unmerklichen Rückstellen des Fahrzeugs 2 eingerichtet und arbeitet daher nur mit langsamen bzw. niederfrequenten Beschleunigungen. Effektiv wird somit am Fahrzeugprüfstand 1 der vom Hochpassfilter 16 gedämpfte oder entfernte niederfrequente Längsbeschleunigungsanteil $a_{NF}$

der ermittelten Längsbeschleunigung a durch den Stellwert des Positionsreglers 17 ersetzt. Die gesamte Verarbeitung beginnend mit der Messung des Drehmoments erfolgt dabei in Echtzeit, d.h. ohne merkliche Verzögerungen. Der Positionsregler 17 ist Teil eines Positionsregelkreises 18 mit einer Positionsmessung des Aktuators 6, welche die aktuelle Position $X_{ist}$ des Läufers des Aktuators 6 ermittelt, und mit einem Differenzglied 19, welches die aktuelle Position $X_{ist}$ mit einer konstanten, vorgegebenen Sollposition $X_{soll}$ vergleicht und die Differenz, welche einer Auslenkung des Läufers aus der Sollposition $X_{soll}$ entspricht, an den Positionsregler 17 übermittelt. Der Positionsregler 17 ermittelt aus der erhaltenen Auslenkung einen Stellwert für die Luftspalt-Kraft $F_{LS}$ des Aktuators 6. Der Positionsregler 17 kann dazu einen Auslenkungsregler (z.B. als P-Regler) zur Ermittlung einer Sollgeschwindigkeit und daran anschließend einen Geschwindigkeitsregler (z.B. als PI-Regler) zur Ermittlung des Stellwerts für die Luftspalt-Kraft $F_{LS}$ des Aktuators umfassen. Der niederfrequente Längsbeschleunigungsanteil $a_{NF}$ entspricht der Differenz 20 zwischen der vom Modell 2' ermittelten Längsbeschleunigung a und dem hochfrequenten Längsbeschleunigungsanteil $a_{HF}$.

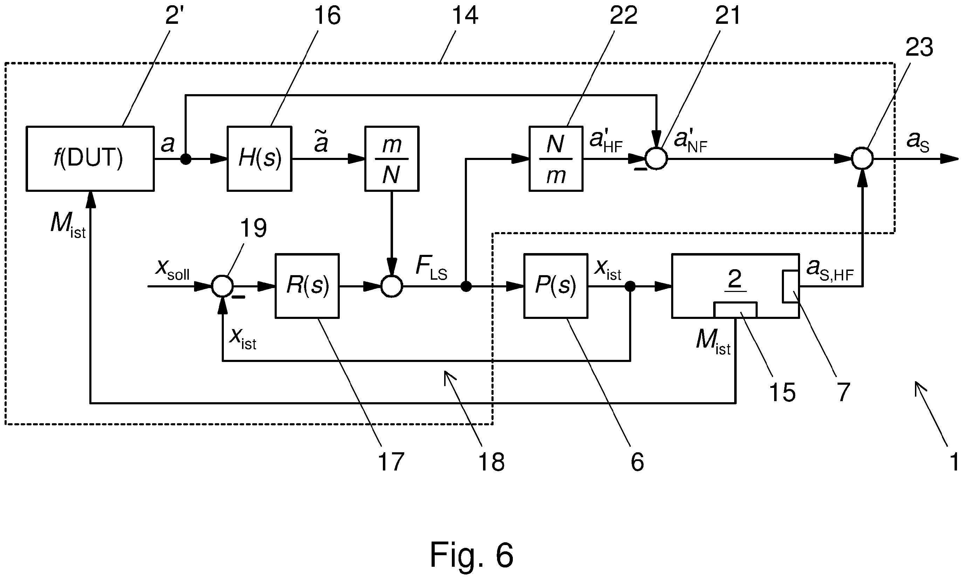

Fig. 6 zeigt den erfindungsgemäßen Fahrzeugprüfstand 1 mit einer Steuervorrichtung 14 zur Berechnung eines alternativen niederfrequenten Längsbeschleunigungsanteils $a'_{NF}$. Das Prüfverfahren macht sich zunutze, dass die Aktuatoren 6 wie in Fig. 1 gezeigt an den Rädern angreifen und somit die fahrzeuginterne Dynamik vom Rad zum Beschleunigungssensor 7 angeregt wird. Um diese Dynamik zu berücksichtigen, ist die Steuervorrichtung 14 gemäß Fig. 6 eingerichtet, den niederfrequenten Längsbeschleunigungsanteil $a'_{NF}$ in Abhängigkeit von der ermittelten Längsbeschleunigung a und zusätzlich in Abhängigkeit von dem Positionsregelkreis 18 des Aktuators 6 zu berechnen, nämlich als die Differenz 21 zwischen der ermittelten Längsbeschleunigung a und einem aus der Stellgröße des Positionsregelkreises 18 (d.h. der Luftspalt-Kraft $F_{LS}$) ermittelten modifizierten hochfrequenten Längsbeschleunigungsanteils $a'_{HF}$. Dieser wird aus der Summe 22 (vereinfacht dargestellt als Faktor N) der Stellgrößen des oder der Aktuatoren 6 dividiert durch die Masse m des Fahrzeugs 2 berechnet. D.h. anstelle der rein aus dem Modell 2' berechneten Längsbeschleunigungsanteile werden die vom Modell 2' berechneten und durch den Positionsregler 17 modifizierten Längskräfte an den Reifen verwendet, mit den eingangs beschriebenen Vorteilen. Die Fahrzeuglängsbeschleunigung $a_S$ wird dann als die Summe 23 (d.h. durch Addition) des wie zuvor erfassten Beschleunigungssignals $a_{S,HF}$ und des modifizierten niederfrequenten Längsbeschleunigungsanteils $a'_{NF}$ ermittelt.

**Patentansprüche**

1. Verfahren zur Ermittlung einer Fahrzeuglängsbeschleunigung ($a_S$) während einer Prüfung eines Fahrzeugs (2) in einem Fahrzeugprüfstand (1), welcher zumindest einen Aktuator (6) zur Bewegung des Fahrzeugs (2) in eine Längsrichtung umfasst,

    wobei während der Prüfung in Echtzeit eine von einem Rad oder einem Antriebsstrang des Fahrzeugs (2) ausgeführte Drehbewegung gemessen, eine Längsbeschleunigung (a) entsprechend der gemessenen Drehbewegung ermittelt, und der zumindest eine Aktuator (6) in Abhängigkeit von der ermittelten Längsbeschleunigung angesteuert wird,
    **dadurch gekennzeichnet, dass** das Fahrzeug (2) mit einem Beschleunigungssensor (7) verbunden ist und
    während der Prüfung ein Beschleunigungssignal ($a_{S,HF}$) des Beschleunigungssensors (7) erfasst und ein niederfrequenter Längsbeschleunigungsanteil ($a'_{NF}$) in Abhängigkeit von der ermittelten Längsbeschleunigung (a) und einem Positionsregelkreis (18) zur Steuerung des Aktuators (6) berechnet wird,
    wobei der niederfrequente Längsbeschleunigungsanteil ($a'_{NF}$) als die Differenz zwischen der ermittelten Längsbeschleunigung (a) und einem aus einer Stellgröße des Positionsregelkreises (18) ermittelten hochfrequenten Längsbeschleunigungsanteil ($a'_{HF}$) berechnet wird, und
    die Fahrzeuglängsbeschleunigung ($a_S$) in Abhängigkeit von dem erfassten Beschleunigungssignal ($a_{S,HF}$) und dem berechneten niederfrequenten Längsbeschleunigungsanteil ($a'_{NF}$) ermittelt wird.

2. Verfahren nach Anspruch 1, **dadurch gekennzeichnet, dass** die Fahrzeuglängsbeschleunigung ($a_S$) durch Überlagerung des erfassten Beschleunigungssignals ($a_{S,HF}$) und des berechneten niederfrequenten Längsbeschleunigungsanteils ($a'_{NF}$) ermittelt wird.

3. Verfahren nach Anspruch 1 oder 2, **dadurch gekennzeichnet, dass** die Stellgröße die vom Aktuator (6) auf das Fahrzeug (2) aufzubringende Kraft ($F_{LS}$) angibt, wobei der hochfrequente Längsbeschleunigungsanteil ($a'_{HF}$) aus der Summe der Stellgrößen des oder der Aktuatoren (6) dividiert durch die Masse des Fahrzeugs (2) berechnet wird.

4. Fahrzeugprüfstand (1) zur Ermittlung einer Fahrzeuglängsbeschleunigung ($a_S$) während einer Prüfung eines Fahrzeugs (2),

    mit einer Messvorrichtung (15) zur Messung einer Drehbewegung eines Rades oder eines Antriebsstrangs des Fahrzeugs (2),
    mit einem Aktuator (6) zur Bewegung des Fahrzeugs (2) in eine Längsrichtung, und

mit einer Steuervorrichtung (14), welche mit der Messvorrichtung (15) und mit dem Aktuator (6) verbunden und eingerichtet ist, während der Prüfung in Echtzeit aus einer von der Messvorrichtung (15) erhaltenen gemessenen Drehbewegung eine entsprechende Längsbeschleunigung (a) zu ermitteln und in Abhängigkeit von der ermittelten Längsbeschleunigung (a) ein Ansteuersignal an den Aktuator (6) zu übermitteln, **dadurch gekennzeichnet, dass** die Steuervorrichtung (14) mit einem Beschleunigungssensor (7) im oder am Fahrzeug (2) verbunden und eingerichtet ist,

während der Prüfung ein Beschleunigungssignal ($a_{S,HF}$) des Beschleunigungssensors (7) zu erfassen,

einen niederfrequenten Längsbeschleunigungsanteil ($a'_{NF}$) in Abhängigkeit von der ermittelten Längsbeschleunigung (a) und einem Positionsregelkreis (18) zur Steuerung des Aktuators (6) zu berechnen, nämlich als die Differenz zwischen der ermittelten Längsbeschleunigung (a) und einem aus einer Stellgröße des Positionsregelkreises (18) ermittelten hochfrequenten Längsbeschleunigungsanteil ($a'_{HF}$), und

die Fahrzeuglängsbeschleunigung in Abhängigkeit von dem erfassten Beschleunigungssignal ($a_{S,HF}$) und dem berechneten niederfrequenten Längsbeschleunigungsanteil ($a'_{NF}$) zu ermitteln.

5. Fahrzeugprüfstand (1) nach Anspruch 4, **dadurch gekennzeichnet, dass** die Steuervorrichtung (14) eingerichtet ist, die Fahrzeuglängsbeschleunigung ($a_S$) durch Überlagerung des erfassten Beschleunigungssignals ($a_{S,HF}$) und des berechneten niederfrequenten Längsbeschleunigungsanteil ($a'_{NF}$) zu ermitteln.

6. Fahrzeugprüfstand (1) nach Anspruch 4 oder 5, **dadurch gekennzeichnet, dass** die Stellgröße die vom Aktuator (6) auf das Fahrzeug (2) aufzubringende Kraft ($F_{LS}$) angibt, wobei die Steuervorrichtung (14) eingerichtet ist, den hochfrequenten Längsbeschleunigungsanteil ($a'_{HF}$) aus der Summe der Stellgrößen des oder der Aktuatoren (6) dividiert durch die Masse des Fahrzeugs (2) zu berechnen.

**Claims**

1. Method for determining a vehicle longitudinal acceleration (as) during a test of a vehicle (2) in a vehicle test stand (1), which comprises at least one actuator (6) for moving the vehicle (2) in a longitudinal direction,

wherein, during the test, a rotational movement performed by a wheel or a drive train of the vehicle (2) is measured in real time, a longitudinal acceleration (a) is determined according to the measured rotational movement, and the at least one actuator (6) is activated on the basis of the determined longitudinal acceleration, **characterised in that** the vehicle (2) is connected to an acceleration sensor (7) and, during the test, an acceleration signal ($a_{S,HF}$) of the acceleration sensor (7) is detected and a low-frequency longitudinal acceleration component ($a'_{NF}$) is calculated on the basis of the determined longitudinal acceleration (a) and a position control loop (18) for controlling the actuator (6),

the low-frequency longitudinal acceleration component ($a'_{NF}$) being calculated as the difference between the determined longitudinal acceleration (a) and a high-frequency longitudinal acceleration component ($a'_{HF}$) determined from a manipulated variable of the position control loop (18), and

the vehicle longitudinal acceleration ($a_S$) is determined on the basis of the detected acceleration signal (as,HF) and the calculated low-frequency longitudinal acceleration component ($a'_{NF}$).

2. Method according to claim 1, **characterised in that** the vehicle longitudinal acceleration ($a_S$) is determined by superimposing the detected acceleration signal ($a_{S,HF}$) and the calculated low-frequency longitudinal acceleration component ($a'_{NF}$).

3. Method according to either claim 1 or claim 2, **characterised in that** the manipulated variable indicates the force ($F_{LS}$) to be applied to the vehicle (2) by the actuator (6), the high-frequency longitudinal acceleration component ($a'_{HF}$) being calculated from the sum of the manipulated variables of the actuator(s) (6) divided by the mass of the vehicle (2).

4. Vehicle test stand (1) for determining a vehicle longitudinal acceleration ($a_S$) during a test of a vehicle (2),

comprising a measuring device (15) for measuring a rotational movement of a wheel or a drive train of the vehicle (2),

comprising an actuator (6) for moving the vehicle (2) in a longitudinal direction, and

comprising a control device (14), which is connected to the measuring device (15) and to the actuator (6) and is set up to determine a corresponding longitudinal acceleration (a) in real time during the test from a measured rotational movement obtained by the measuring device (15), and to transmit an activation signal to the actuator (6) on the basis of the determined longitudinal acceleration (a),
**characterised in that** the control device (14) is connected to an acceleration sensor (7) in or on the vehicle (2) and is set up
to detect an acceleration signal ($a_{S,HF}$) of the acceleration sensor (7) during the test,
to calculate a low-frequency longitudinal acceleration component ($a'_{NF}$) on the basis of the determined longitudinal acceleration (a) and a position control loop (18) for controlling the actuator (6), specifically as the difference between the determined longitudinal acceleration (a) and a high-frequency longitudinal acceleration component ($a'_{HF}$) determined from a manipulated variable of the position control loop (18), and to determine the vehicle longitudinal acceleration on the basis of the detected acceleration signal ($a_{S,HF}$) and the calculated low-frequency longitudinal acceleration component ($a'_{NF}$).

5. Vehicle test stand (1) according to claim 4, **characterised in that** the control device (14) is set up to determine the vehicle longitudinal acceleration ($a_S$) by superimposing the detected acceleration signal (as,HF) and the calculated low-frequency longitudinal acceleration component ($a'_{NF}$).

6. Vehicle test stand (1) according to either claim 4 or claim 5, **characterised in that** the manipulated variable indicates the force ($F_{LS}$) to be applied to the vehicle (2) by the actuator (6), the control device (14) being set up to calculate the high-frequency longitudinal acceleration component ($a'_{HF}$) from the sum of the manipulated variables of the actuator(s) (6) divided by the mass of the vehicle (2).

**Revendications**

1. Procédé destiné à déterminer une accélération longitudinale de véhicule (as) pendant un essai d'un véhicule (2) dans un banc d'essai de véhicule (1) lequel banc d'essai de véhicule comprend au moins un actionneur (6) pour le mouvement du véhicule (2) dans une direction longitudinale ;

dans lequel pendant l'essai en temps réel un mouvement de rotation exécuté par une roue ou une chaîne cinématique du véhicule (2) est mesuré, une accélération longitudinale (a) correspondant au mouvement de rotation mesuré est déterminée, et le au moins un actionneur (6) est piloté en fonction de l'accélération longitudinale déterminée,
**caractérisé en ce que** le véhicule (2) est relié à un capteur d'accélération (7) et

pendant l'essai un signal d'accélération ($a_{S,HF}$) du capteur d'accélération (7) est saisi et une proportion d'accélération longitudinale à basse fréquence ($a'_{NF}$) est calculée en fonction de l'accélération longitudinale (a) déterminée et d'une boucle de circulation de position (18) pour la commande de l'actionneur (6),
dans lequel la proportion d'accélération longitudinale à basse fréquence ($a'_{NF}$) est calculée en tant que différence entre l'accélération longitudinale (a) déterminée et une proportion d'accélération longitudinale à haute fréquence ($a'_{HF}$) déterminée à partir d'une grandeur réglante de la boucle de circulation de position (18), et l'accélération longitudinale de véhicule (as) est déterminée en fonction du signal d'accélération ($a_{S,HF}$) saisi et de la proportion d'accélération longitudinale à basse fréquence ($a'_{NF}$) calculée.

2. Procédé selon la revendication 1, **caractérisé en ce que** l'accélération longitudinale de véhicule (as) est déterminée par superposition du signal d'accélération ($a_{S,HF}$) saisi et de la proportion d'accélération longitudinale à basse fréquence ($a'_{NF}$) calculée.

3. Procédé selon la revendication 1 ou 2, **caractérisé en ce que** la grandeur réglante indique la force ($F_{LS}$) à appliquer au véhicule (2) par l'actionneur (6), dans lequel la proportion d'accélération longitudinale à haute fréquence ($a'_{HF}$) est calculée à partir de la somme des grandeurs réglantes du ou des actionneur(s) (6) divisée par la masse du véhicule (2).

4. Banc d'essai de véhicule (1) destiné à déterminer une accélération longitudinale de véhicule (as) pendant un essai d'un véhicule (2),

avec un dispositif de mesurage (15) pour mesurer un mouvement de rotation d'une roue ou d'une chaîne cinématique du véhicule (2),
avec un actionneur (6) pour le mouvement du véhicule (2) dans une direction longitudinale, et avec un dispositif de commande (14), lequel est relié au dispositif de mesurage (15) et à l'actionneur (6) et conçu pour, pendant l'essai en temps réel, déterminer une accélération longitudinale (a) correspondante à partir d'un mouvement de rotation mesuré obtenu par le dispositif de mesurage (15) et transmettre un signal de pilotage à l'actionneur (6) en fonction de l'accélération longitudinale (a) déterminée,
**caractérisé en ce que** le dispositif de commande (14) est relié à un capteur d'accélération (7) dans ou au niveau du véhicule (2) et conçu pour saisir un signal d'accélération ($a_{S,HF}$) du capteur d'accélération (7) pendant l'essai,
calculer une proportion d'accélération longitudinale à basse fréquence ($a'_{NF}$) en fonction de l'accélération longitudinale (a) déterminée et d'une boucle de circulation de position (18) pour la commande de l'actionneur (6), à savoir en tant que différence entre l'accélération longitudinale (a) déterminée et une proportion d'accélération longitudinale à haute fréquence (a'$_{HF}$) déterminée à partir d'une grandeur réglante de la boucle de circulation de position (18), et déterminer l'accélération longitudinale de véhicule en fonction du signal d'accélération (a$_{S,HF}$) saisi et de la proportion d'accélération longitudinale à basse fréquence (a'$_{NF}$) calculée.

5. Banc d'essai de véhicule (1) selon la revendication 4, **caractérisé en ce que** le dispositif de commande (14) est conçu pour déterminer l'accélération longitudinale de véhicule (as) par superposition du signal d'accélération (a$_{S,HF}$) saisi et de la proportion d'accélération longitudinale à basse fréquence (a'$_{NF}$) calculée.

6. Banc d'essai de véhicule (1) selon la revendication 4 ou 5, **caractérisé en ce que** la grandeur réglante indique la force (F$_{LS}$) à appliquer au véhicule (2) par l'actionneur (6), dans lequel le dispositif de commande (14) est conçu pour calculer la proportion d'accélération longitudinale à haute fréquence (a'$_{HF}$) à partir de la somme des grandeurs réglantes du ou des actionneur(s) (6) divisée par la masse du véhicule (2).

Fig. 1

EP 3 631 402 B1

Fig. 2a

Fig. 2b

EP 3 631 402 B1

Fig. 3

Fig. 4

Fig. 5

Fig. 6

EP 3 631 402 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015157788 A1
- EP 1085312 A2
- US 6598467 B1
- EP 0846945 B1
- US 4169370 A

**In der Beschreibung aufgeführte Nicht-Patentliteratur**

- **PILLAS J. ; KIRSCHBAUM F. ; JAKOBI R. ; GEBHARDT A. ; UPHAUS F.** Model-based load change reaction optimization using vehicle drivetrain test beds. *Tagungsband des 14. Internationalen Stuttgarter Symposiums,* 2014, 857-867